# EUROPEAN PATENT SPECIFICATION

(11) **EP 0 378 275 B1**
(45) Date of publication and mention of the grant of the patent: **17.04.1996**
(21) Application number: 90200062.9
(22) Date of filing: 10.01.1990
(51) Int. Cl.: C04B 33/04, C04B 33/16, C04B 35/16, C04B 33/00

(54) **Plate product of ceramic material and process for the manufacturing thereof**
Flachprodukt aus keramischem Material und Verfahren zu seiner Herstellung
Produit plat en céramique et procédé pour la production de celui-ci

(30) Priority: 13.01.1989 IT 8550589
(43) Date of publication of application: 18.07.1990
(73) Proprietor: TONCELLI, Marcello, I-36061 Bassano Del Grappa (Vicenza) (IT)
(72) Inventor: TONCELLI, Marcello, I-36061 Bassano Del Grappa (Vicenza) (IT)
(74) Representative: Dragotti, Gianfranco

(56) References cited:
- DE-A- 3 314 794
- DE-B- 1 671 244
- FR-A- 2 387 749
- SOVIET INVENTIONS ILLUSTRATED, Week 23, L02, abstract no. 87-161830/23, 17 June 1987 and SU-A-1265176

## Description

The present invention relates to the manufacturing of ceramic material in plate form, particularly of great size, starting from natural stone material, as well as to the related manufacturing process.

In the field of the building materials, particularly for flooring and external or even internal facing of walls and buildings, there are known the ceramic material and the plate like agglomerates, apart obviously from the material of natural origin, such as the stone plates (marbles, granites, travertines, etc.).

The last type in the course of the centuries has been mostly substituted for by alternative materials, since it is a very expensive material, especially when it is a valuable stone, with low yields and difficult availability.

The ceramic materials are available in form of tiles of very reduced size, normally not higher then 40x40 cm, which only in the case of particular materials, such as the so-called "brickwork", can be sligthly greater, suffering however from some further drawbacks.

As a matter of fact, in the case of the standard ceramic material, the upper surface of which has a vetrified appearance, the absorption resistance and consequently the resistance to the chemical and atmospherical agents is excellent, whereas the mechanical resistance and the inpact resistance can be poor. To those features a high aesthetical value is to be added, even if whatever pattern reproduced onto to the surface of the ceramic materials is devoid of "deepness" since the starting mixture is prepared from powders.

In turn the above mentioned "brickwork" obtained from a clay paste containing particular salt additives, has additionally a relevant porosity which is eliminated or at least reduced by means of particular surface treatments carried out after the laying down, or making use of the so-called gresification.

Even the ceramic gres of high quality, which is better than the enameled ceramic as regards the mechanical behaviour, is normally manufactured in the size of 30x30 cm and in a reduced amount in the size of 40x40 cm.

In turn the agglomerates or conglomerates are manufactured in form of plates or blocks starting from inert stone materials, having a widely variable granule size, which are bonded by means of cement binders or by means of polymeric binders.

In the first case the molded plate is hardened essentially in same manner as a conventional cement item, with the long times which are consequently necessary, and then carried out finishing steps such as dressing, polishing and possibly size cutting, those being only the main steps.

The agglomerates realized with polymeric binders on the contrary involve a polymerization or cross linking steps of the polymer forming the binder.

A process for the manufacturing of these aggregates is the subject of the two Italian Patents Nos. 1,056,388 and 1,117,346, which are herein incorporated for reference.

Such a process, by adopting the simultaneous action of the vacuum and of the vibropressing, in the phase of product molding, has permitted to achieve satisfactory results under the point of view not only of aestethic and dimensional properties of the products (as a matter of fact plates of several metres of length imitating natural stone can be manufactured), but also under the point of view of the mechanical properties.

Of course these mechanical properties remain within the scope of those which are possible for an agglomerate of this type and from the aesthetic point of view the resulting products maintain a certain "flatness" or lack of deepness at the surfaces formed by the binding material. From the point of view of industrial manufacturing, the process and apparatus disclosed in the afore said Italian Patents permitted the ratio between inert component and binder to be reduced to a minimum and at the same time to relevantly increase the mechanical properties of the final product.

Coming now shortly back to the ceramic materials, it is worth to note that to date it has not been possible to manufacture in an industrially acceptable manner products, namely tiles, of a size greater then the above mentioned ones, since by applying the to date known processes for the ceramic materials in the molding phase enormous pressures would be necessary, which are fully not acceptable and not applicable in an industrial line; likewise insoluble problems would be raised, moreover, by the firing phase as a consequence of the relevant shrinkages especially in the horizontal direction and due to the diminution of volume from the green state to the fired state of the material.

As a matter of fact, thus, the situation can now be summed up in the following terms:
1) By having recourse to the natural stones (granite, porphyry, etc.) the working yields are very low (it will be enough to consider that in the average marble quarry the yields as plates with respect to the digged material is normally of the order of 15-20%). In addition it is very difficult to obtain very great amounts of material which is uniform as to the aesthetic properties.
2) The recourse to the ceramic materials is limited to very small sizes, with the self-evident limitations in the use of vertical facings especially for external surfaces in the building industry, particularly in buildings of relevant height.
3) The agglomerates manufactured starting from stone materials with cement or polymeric binders, although resolving the problems of length of the plates and of the aesthetic uniformity, are affected by intrinsic limitations under the point of view of the caracteristics and properties both mechanical and of resistance to the atmospherical agents depending on the properties of binders used.

The purpose of the present invention is thus that of providing a product having the advantageous properties of the ceramic materials without the intrinsic limitations of the related present technology; otherwise stated, the purpose of the present invention is that of providing plate materials of ceramic nature, having great size and by means of an industrially acceptable and advantageous process by which also the exceedingly high diminution of the size in cross direction of the plates is eliminated, as due to the volumetric variation in the firing phase.

This purpose is achieved by means of a manufacturing process and consequently by means of the product resulting there-from, the process being caracterized by the following steps:
a) preparation of the ceramic mixture comprising a granulate having particles of maximum size consistant with the thickness of the final compacted plate, said granulate being obtained from natural stone materials, or from the granulation of ceramic materials, even prepared for this purpose, and a binding phase consisting of powders for ceramic materials moistened and mixed with an inorganic water-based binder likewise the standard agents used in the technology of ceramic materials, the percentage of the binding phase referred to in the final composition being between 45% and 65% by volume, the maximum size of the granules being preferably less then 1/3 of the thickness of the compacted plate;
b) molding in form of plate of the mixture thus prepared and distributed onto a molding support, by simultaneous application of a vibration action and of a pressing action onto the distributed mixture, the pressure being at least 0.5 kg/sq.cm., the mixture being subjected throughout the molding phase to a vacuum of at least 40 mbar of residual pressure;
c) drying of the molded product at a temperature lower than that of ceramic firing and for a time of at least two hours;
d) firing of the molded and dried product at a temperature of between 1000°C and 1300°C for the time necessary to obtain a plate of ceramic material having the properties caracteristic of these materials.

Obviously the above definition corresponds to the most general embodiment of the present invention, and preferred embodiments are foreseen which shall be precised in the detailed description which follows.

As already mentioned, in the first step of the process a ceramic mixture is prepared from a granulate and a binding phase.

The granulate is obtained from natural minerals, preferably feldspars, porphyry, granites, quartz materials, and is preferably subjected to a preliminary calcination, having the purpose of stabilizing the granulates, mainly by removing the moisture and impurities which it may naturally contain; such a stabilizing treatment is effective as regards the reduction of the shrinkage of the final plates in the step of ceramic firing.

These materials can be even more effectively substituted for by granulates coming from the grinding of ceramic materials, for example porcelain masses or gresified materials of various compositions of natural and/or varied colour, whereby aggregates are obtained which are dimensionally stabilized and devoid of impurities.

The binding phase comprises a powder material of the type conventionally used for the manufacturing of ceramic materials, mainly feldspars, nephelines, syenites, added with clays and/or kaolin and/or bentonites, in admixture with the other ingredients which are normally used for the preparation of the starting materials of the ceramic products, the mixture being such that in the firing step the volumetric shrinkage takes places mainly in vertical direction with respect to the plate in order to render minimum the shrinkage in the horizontal direction. Also the powder material forming the binding phase, in the presence of impurities, may be previously calcinated in order to obtain stable powders in the firing step.

To promote the intimate admixing of the binding phase with the granulate and to give the mixture a greater cohesion in the molding step and a sufficient flowability of the particles forming the mixture in the step of compaction by vibro-pressing under vacuum, the powdered material is moistened with a water-based inorganic binder, preferably with sodium silicate (also known as liquid glass).

The volume percent of binding phase with respect to the granulate is selected taking into account that this phase must form a continuous matrix in the final ceramic product, in which matrix the particles of aggregate mineral remain anchored without being embedded therewithin. The percentage of binding phase is of between 45% and 65% by volume referred to the final composition.

After the firing the granules form within the mass a continuous backbone by which the product is provided with a flexural strength higher than 300 kg./sq.cm.

The binding phase consists of ceramic powder moistened with a liquid binder, and such a moistening together with the admixing with the granulate takes place preferably but not necessarily in a mixing apparatus operating under vacuum whereby the inclusion of air or other gas within the mixture mass is limited as much as possible. Of course this caution has it too, as the main purpose, that of reducing the shrinkages in the firing step, avoiding at the same time internal and/or surface porosity of the final product.

Turning now to the molding step, it comprises the distribution the above said ceramic mixture onto a support which in the preferred embodiment consists of a mold, even if the operation can be carried out as well directly onto a conveying belt, without having recourse to a containing mold but merely to a movable containing frame, positioned onto the belt in the distribution and molding step.

Once the mixture has been distributed to a substantially uniform thickness of between 15 and 60 mm, in the environment surrounding the mold a vacuum of at least 40 mbar of residual pressure, preferably of between 28 and 18 mbar, is established.

The proper molding step consists in applying to the mixture distributed and contained within the mold or to the mixture distributed and contained onto the conveying belt a vibration motion, with a driving force of at least 1.5 kg/sq.cm, preferably 2 kg/sq.cm, with a vibration frequency of about 60 Hz, the mixture contained within the mold being simultanously subjected to a compacting pressure of at least 0.5 kg/sq.cm, preferably 1.1 kg/sq.cm.

The molding time is on the average of the order of 30-60 seconds, normally about 40 seconds.

Once the molding step has been completed, the room pressure is set again within the molding machine and the raw product thus molded is removed from the mold.

This raw product is then passed to the thermal treatment section, which treatment takes place in two different steps, namely the drying and the proper firing.

The drying is carried out in a proper oven and at a temperature lower than that of firing, for a time of at least 2 hours, with an average staying of some hours at a drying temperature of about 130°C.

After drying, the dried product is easily handled, does not show remarkable volume shrinkages and has a not negligible flexural strength in the order of 100 kg/sq.cm. The firing step is carried out in a second oven wherein the dried material remains for some hours at a temperature of 1000-1300°C. However both the heating phase and the cooling phase at the end of the firing take place in a gradual manner.

The thus obtainend product is in form of plates of great size, and can reach several linear metres, thanks to the fact that the pressures and the other forces acting in the molding step have modest intensity and are consistent with manufacturing on an industrial scale.

Under the aesthetical point of view, the obtained plates have a surface appearance very similar to that of the natural stones from which the starting granulate has been obtained: more particularly the surface has a certain transparency owing to which the particles of the starting granulate retained within the binding ceramic matrix and intimately and irreversibly bonded thereto can be clearly distinguished. When the granules are formed by ceramic materials (porcellanes of several compositions, gres, etc.), prepared to this end with several colours and ground, aesthetical effects of exceptional chromatic and composition value are achieved.

Lastly, once the starting ceramic mixture and the process conditions have been set, there are no further limits to the amount of plates which can be manufactured with identical aesthetic and chromatic tonality properties, such a result being to date impossible using natural stone digged from quarry.

The plates moreover have a high flexural strength, higher than 300 kg/sq.cm., show isotropy for the different mechanical properties (this feature being not shown by the natural stones), have high specific density and generally optimum mechanical properties which are definitely higher than those of the above mentioned agglomerates, even if manufactured starting from the same stone material forming the starting granulate.

The plates can be moreover polished in the same manner as natural stone and have high resistance to the atmospherical and chemical agents, together with an almost null water absorption and a high wear resistance.

Owing to these properties the ceramic plates manufactured by the process of the present invention are mainly useful for the external facing panels of buildings and in the flooring of surfaces undergoing an intense walking.

Some typical formulations of the starting mixture are hereinafter reported, in which only the solid ingredients are indicated, since the moistening agent is used in small amounts, such as to provide only a slight moistening of the granulate and of the ceramic powder, and having moreover the function of giving to the dried plate a mechanical strength sufficient to permit the handling thereof and the starting of the firing step (about 70-100 kg/sq.cm. of flexural strength).

| | | |
|---|---|---|
| A) | Clay | 40% |
| | Feldspars | 60% |
| B) | Feldspars | 90% |
| | Bentonite | 2% |
| | Kaolin | 8% |
| C) | Kaolin | 5% |
| | Silica/quartz | 16% |
| | Sodium/potassium feldspars | 79% |
| D) | Clay | 30% |
| | Quartz | 15% |
| | Feldspars | 55% |

In the experimental tests carried out with above indicated compositions it has been found that particularly with granulates having the composition C a product is obtained characterized by a high degree of surface transparency, and that the composition B gives to the matrix transparency and permits vertical volume variations.

It is lastly to be observed that in the above description reference has been made to preferred embodiments, but modifications and changes conceptually equivalent are possible and foreseeable.

Particularly it is possible and foreseen the use of all of the materials employed in the conventional manufacturing of ceramic materials and particularly of the several additives and manufacturing aids contemplated by this technology.

Possible and foreseeable as well is the admixing of starting materials which have no counterpart in the materials naturally existing and of ceramic materials of various compositions and colours which are suitably ground with the self evident advantages from the point of view aesthetical and/or of balancing the peculiar properties of each component.

## Claims

1. A process for the manufacturing of plates of ceramic material caracterized by the following steps:
a) preparation of the ceramic mixture comprising a granulate having particles of maximum size consistant with the thickness of the final compacted plate, said granulate being obtained from natural stone materials, or from the granulation of ceramic materials, even prepared for this purpose, and a binding phase consisting of powders for ceramic materials moistened and mixed with an inorganic water-based binder, the percentage of the binding phase referred to in the final composition being between 45% and 65% by volume, the maximum size of the granules being preferably less then 1/3 of the thickness of the compacted plate;
b) molding in form of plate of the mixture thus prepared and distributed onto a molding support, by simultaneous application of a vibration action and of a pressing action onto the distributed mixture, the pressure being at least 0.5 kg/sq.cm., the mixture being subjected throughout the molding phase to a vacuum of at least 40 mbar of residual pressure;
c) drying of the molded product at a temperature lower than that of ceramic firing and for a time of at least two hours;
d) firing of the molded and dried product at a temperature of between 1000°C and 1300°C for the time necessary to obtain a plate of ceramic material having the properties caracteristic of these materials.

2. A process according to claim 1, characterized in that said granulate is selected among feldspars, porphyry, granites, syenites and quartz materials as well as granulated ceramic materials.

3. A process according to claim 1, characterized in that said binding phase consists of a material selected among feldspars, nephelines, clays, bentonites, kaolins, and their mixtures, previously calcinated and brought to powder form.

4. A process according to claim 1, characterized in that said moistening agent is sodium silicate in aqueous solution and/or another refractory binder in aqueous solution.

5. A process according to claim 1, characterized in that said starting granulate is preliminarily subjected to a calcination thermal treatment.

6. A process according to claim 1, characterized in that the preparation of the starting mixture by admixing granulate, ceramic powder and moistening agent is carried out in a mixer maintained under vacuum.

7. A process according to claim 1, characterized in that in said molding step said mixture is distributed into a containing mold or onto a belt provided with a containing frame and abutting onto a supporting metal plane.

8. A process according to claim 1, characterized in that in said molding step said simultaneous application of vibration and of compacting pressure has a duration of about 40 seconds, it taking place under vacuum.

9. A process according to claim 1, charaterized in that said drying step is carried out at a temperature of 130°C.

10. A process according to claim 1, characterized in that in said firing step both the heating to the firing temperature and the cooling after the firing are carried out gradually.

11. Ceramic plate material consisting of a granulate of either natural stone or ground ceramic material embedded in a continuous matrix formed by a binding phase resulting from the firing of a powder material used in the manufacturing of ceramic materials, the ceramic plate material being isotropic, having a flexural strength higher than 300 kg/sq.cm., having high specific density, high wear resistance and almost null water absorption, characterized in that said binding phase consists of powdered materials selected among feldspars, nephelines, syenites, clays, kaolin and bentonites.

12. Ceramic plate material according to claim 11, characterized in that said powdered materials of said binding phase are moistened with sodium silicate.

13. Ceramic plate material according to claim 11, characterized in that said granulate is selected among feldspars, porphyry, granite and quartz.

14. Ceramic plate material according to claim 11, characterized in that said granulate consists of the material resulting from the grinding of ceramic materials.

15. Ceramic plate material according to claim 14, characterized in that said granulate is the material resulting from the grinding of porcelain or gresified material.

16. Ceramic plate material according to claim 11, characterized in that said granulate has a size less than 1/3 of the thickness of the final plate material.

## Patentansprüche

1. Verfahren zur Herstellung von Platten aus keramischem Material, das durch die folgenden Schritte gekennzeichnet ist:
a) Herstellung der keramischen Mischung, die ein Granulat, das Partikel einer maximalen Größe, die mit der Dicke der fertigen gepreßten Platte im Einklang steht, hat, wobei das Granulat aus natürlichen Steinmaterialien oder durch Granulieren keramischer Materialien, die sogar zu diesem Zweck hergestellt sind, erhalten wird; und eine Bindungsphase enthält, die aus Pulvern für keramische Materialien, welche angefeuchtet und mit anorganischem Bindemittel auf Wasserbasis vermischt sind, besteht; wobei der Prozentgehalt der Bindungsphase, bezogen auf die Endzusammensetzung, zwischen 45 Vol% und 65 Vol% liegt, die maximale Größe der Partikel vorzugsweise weniger als 1/3 der Decke der gepreßten Platte ist;
b) Formen der auf diese Weise hergestellten und auf einer Formungsunterlage verteilten Mischung in Plattenform, indem auf die verteilte Mischung gleichzeitig Vibration und Druck angewendet wird; wobei der Druck mindestens 0,5 kg/cm² ist und die Mischung während der Formungsphase einem Vakuum mit mindestens 40 mbar Restdruck unterworfen wird;
c) Trocknen des geformten Produktes bei einer Temperatur, die tiefer ist als die des keramischen Brennens, und für einen Zeitraum von mindestens zwei Stunden;
d) Brennen des geformten und getrockneten Produktes bei einer Temperatur zwischen 1000°C und 1300°C für eine Zeit, die notwendig ist, um eine Platte aus keramischem Material zu erhalten, die die für diese Materialien charakteristischen Eigenschaften aufweist.

2. Verfahren nach Anspruch 1, dadurch **gekennzeichnet,** daß das Granulat unter Feldspaten, Porphyr, Graniten, Syeniten und Quarzmaterialien sowie granulierten keramischen Materialien ausgewählt wird.

3. Verfahren nach Anspruch 1, dadurch **gekennzeichnet,** daß die Bindungsphase aus einem Material besteht, das unter Feldspaten, Nephelinen, Tonerden, Bentoniten, Kaolinen, Gemischen der genannten ausgewählt wird, vorausgehend kalziniert und in Pulverform gebracht wird.

4. Verfahren nach Anspruch 1, dadurch **gekennzeichnet,** daß das angefeuchtende Agens Natriumsilikat in wäßriger Lösung und/oder ein anderes feuerfestes Material in wäßriger Lösung ist.

5. Verfahren nach Anspruch 1, dadurch **gekennzeichnet,** daß das Ausgangsgranulat einleitend einer thermischen Kalzinierungsbehandlung unterzogen wird.

6. Verfahren nach Anspruch 1, dadurch **gekennzeichnet,** daß die Herstellung der Ausgangsmischung durch Vermischen von Granulat, keramischem Pulver und anfeuchtendem Mittel in einem Mischer, der unter Vakuum gehalten wird, durchgeführt wird.

7. Verfahren nach Anspruch 1, dadurch **gekennzeichnet,** daß die Mischung im Schritt des Formens in einer Behälterform oder auf einem Band, das mit einem Halterahmen versehen ist und an die tragende Metallebene angrenzt, verteilt wird.

8. Verfahren nach Anspruch 1, dadurch **gekennzeichnet,** daß die gleichzeitige Anwendung von Vibration und Preßdruck im Schritt des Formens eine Dauer von etwa 40 Sekunden hat und unter Vakuum stattfindet.

9. Verfahren nach Anspruch 1, dadurch **gekennzeichnet,** daß der Trocknungsschritt bei einer Temperatur von 130°C durchgeführt wird.

10. Verfahren nach Anspruch 1, dadurch **gekennzeichnet,** daß im Schritt des Brennens sowohl das Erhitzen zur Brenntemperatur als auch das Abkühlen nach dem Brennen schrittweise durchgeführt werden.

11. Keramisches Plattenmaterial bestehend aus einem Granulat entweder aus natürlichem Stein oder gemahlenem keramischen Material, das in einer zusammenhängenden Matrix eingebettet ist, welche durch eine Bindungsphase, die beim Brennen eines bei der Herstellung keramischer Materialien verwendeten Pulvermaterials resultiert, gebildet wird; wobei das keramische Plattenmaterial isotrop ist, eine Biegefestigkeit von über 300 kg/cm² hat, eine hohe spezifische Dichte, hohe Abriebfestigkeit und eine Wasserabsorption von fast Null hat, dadurch **gekennzeichnet,** daß die Bindungsphase aus gepulverten Materialien besteht, die unter Feldspaten, Nephelinen, Syeniten, Tonerden, Kaolin und Bentoniten ausgewählt sind.

12. Keramisches Plattenmaterial nach Anspruch 11, dadurch **gekennzeichnet,** daß die gepulverten Materialien der Bindungsphase mit Natriumsilikat angefeuchtet sind.

13. Keramisches Plattenmaterial nach Anspruch 11, dadurch **gekennzeichnet,** daß das Granulat unter Feldspaten, Porphyr, Granit und Quarz ausgewählt ist.

14. Keramisches Plattenmaterial nach Anspruch 11, dadurch **gekennzeichnet,** daß das Granulat aus dem Material besteht, das aus dem Vermahlen von keramischen Materialien resultiert.

15. Keramisches Plattenmaterial nach Anspruch 11, dadurch **gekennzeichnet,** daß das Granulat das Material ist, das aus dem Vermahlen von Porzellan- oder dichtgebranntem Material resultiert.

16. Keramisches Plattenmaterial nach Anspruch 11, dadurch **gekennzeichnet,** daß das Granulat eine Größe von weniger als 1/3 der Dicke des fertigen Plattenproduktes hat.

## Revendications

1. Procédé pour la fabrication de plaques en matériau céramique, caractérisé par les étapes suivantes :
a) préparation du mélange céramique comprenant un granulé ayant des particules d'une taille maximale cohérente avec l'épaisseur de la plaque compactée finale, ledit granulé étant obtenu à partir de matériaux de roches naturelles, ou à partir de la granulation de matériaux céramiques, justement préparés à cette fin, et une phase de liaison consistant en des poudres pour matériaux céramiques humidifiées et mélangées avec un liant non organique à base d'eau, le pourcentage de la phase de liaison mentionné dans la composition finale étant compris entre 45 % et 65 % en volume, la taille maximale des granulés étant de préférence inférieure au 1/3 de l'épaisseur de la plaque compactée;
b) moulage sous la forme d'une plaque du mélange ainsi préparé et distribué sur un support de moulage, par application simultanée d'une action de vibration et d'une action de pressage sur le mélange distribué, la pression étant d'au moins 0,5kg/cm², le mélange étant exposé pendant toute la phase de moulage, à un vide d'au moins 40 mbar de pression résiduelle;
c) séchage du produit moulé à une température inférieure a celle d'une cuisson céramique et pendant une durée d'au moins deux heures;
d) cuisson du produit moulé et séché à une température comprise entre 1000°C et 1300°C pendant la durée nécessaire pour obtenir une plaque de matériaux céramiques ayant les propriétés caractéristiques de ces matériaux.

2. Procédé selon la revendication 1, caractérisé en ce que ledit granulé est sélectionné parmi les matériaux à base de feldspath, de porphyre, de granite, de syenite et de quartz, ainsi que de matériaux céramiques et granulés.

3. Procédé selon la revendication 1, caractérisé on ce que ladite phase de liaison consiste en un matériau sélectionné par les feldspath, des nephelines, des argiles, des bentonites, des kaolins et leurs mélanges, calcinés au préalable et amenés sous forme de poudre:

4. Procédé selon la revendication 1, caractérisé en ce que ledit agent d'humidification et de silicate de sodium en solution aqueuse et/ou un autre liant réfractaire en solution aqueuse.

5. Procédé selon la revendication 1, caractérisé en ce que ledit granulé de départ est soumis au préalable à un traitement thermique de calcination.

6. Procédé selon la revendication 1, caractérisé en ce que la préparation du mélange de départ par un mélange de granulés, de poudre céramique et d'agents d'humidification, est effectué dans un mélangeur maintenu sous vide.

7. Procédé selon la revendication 1, caractérisé en ce que ladite étape de moulage dudit mélange est effectué dans un moule de confinement ou sur une courroie pourvue d'un cadre de confinement et butant contre un plan métallique de support.

8. Procédé selon la revendication 1, caractérisé en ce que, dans ladite étape de moulage, ladite application simultanée de vibration et d'une pression de compactage a une durée d'à peu près 40 secondes, ceçi étant effectué sous vide.

9. Procédé selon la revendication 1, caractérisé en ce que ladite étape de séchage est effectuée à une température de 130°C.

10. Procédé selon la revendication 1, caractérisé en ce que ladite étape de cuisson, constituant à la fois en le chauffage à la température de cuisson et le refroidissement après la cuisson, est effectuée graduellement.

11. Matériau de plaque céramique consistant en un granulé à base de roches naturelles ou de céramiques broyées noyées dans une matrice continue, formée par une phase de liaison résultant de la cuisson d'un matériau pulvérulent utilisé de la fabrication de matériaux céramiques, le matériau de plaque céramique étant isotrope, ayant une résistance à la flexion supérieure à 300 kg/cm², ayant une densité spécifique élevée, une résistance à l'usure élevée et une absorption d'eau à peu près nulle, caractérisé en ce que ladite phase de liaison consiste en des matériaux pulvérulents sélectionnés par des feldspath, des nephelines, des syenites, des argiles, du kaolin et des bentonites.

12. Matériau de plaque céramique selon la revendication 11, caractérisé en ce que lesdits matériaux pulvérulents de ladite phase de liaison sont humidifiés avec du silicate de sodium.

13. Matériau de plaque céramique selon la revendication 11, caractérisé en ce que ledit granulé est sélectionné parmi des feldspath, des porphyres, du granite et du quartz.

14. Matériau de plaque céramique selon la revendication 11, caractérisé en ce que ledit granulé consiste en le matériau résultant du broyage de matériaux céramiques.

15. Matériau de plaque céramique selon la revendication 14, caractérisé en ce que ledit granulé est le matériau résultant du broyage de porcelaine ou de matériau grésifié.

16. Matériau de plaque céramique selon la revendication 11, caractérisé en ce que ledit granulé présente une taille inférieure au 1/3 de l'épaisseur du matériau de plaque finale.
